# EUROPÄISCHE PATENTSCHRIFT

(11) **EP 0 707 435 B1**
(45) Veröffentlichungstag und Bekanntmachung des Hinweises auf die Patenterteilung: **19.01.2000**
(21) Anmeldenummer: 95115563.9
(22) Anmeldetag: 02.10.1995
(51) Int. Cl.: H05B 39/04, H02M 7/5383, H02M 1/12

(54) **Getaktete Stromversorgung zum Betreiben von Glühlampen**
Power switching circuit for operating incandescent lamps
Alimentation à découpage pour lampes à incandescence

(30) Priorität: 12.10.1994 DE 4436464
(43) Veröffentlichungstag der Anmeldung: 17.04.1996
(73) Patentinhaber: Patent-Treuhand-Gesellschaft für elektrische Glühlampen mbH, 81543 München (DE)
(72) Erfinder: Lecheler, Reinhard, D-86633 Neuburg an der Donau (DE)

(56) Entgegenhaltungen:
- EP-A- 0 264 765
- US-A- 4 625 270

## Beschreibung

Die Erfindung betrifft getaktete Stromversorgungen zum Betreiben von Glühlampen, z.B. Niedervolt-Halogenglühlampen an einem Wechselspannungsnetz oder einer Gleichspannungsquelle gemäß dem Oberbegriff des Anspruchs 1.

Für diese Art von getakteten Stromversorgungen ist auch die Bezeichnung elektronischer Transformator oder elektronischer Konverter gebräuchlich. Ein wesentliches Merkmal ist mindestens ein Schaltteil mit einem oder mehreren schnellen Schaltern - in der Regel werden dafür schnelle Schalttransistoren verwendet. Das Schaltteil wird üblicherweise als Gegentaktwandler in Halb- oder Vollbrückenschaltung realisiert. Es wandelt die Spannung an seinem Eingang, z.B. die gleichgerichtete Netzspannung in eine hochfrequent getaktete Spannung. Dadurch entstehen, insbesondere im Bereich der Schalter schnelle Potentialänderungen gegenüber der geerdeten Gehäusemasse (Geräte der Schutzklasse I) oder der Umgebung bzw. Erde (Geräte der Schutzklasse II). Mittels kapazitiver Kopplungen über parasitäre Kapazitäten im wesentlichen zwischen dem Schaltteil bzw. den Anschlußleitungen der Sekundärseite des Leistungsübertragers und der Erde können Gleichtakt-Störströme durch die getaktete Stromversorgung fließen. Eine ausführliche Beschreibung der Entstehung von Funkstörungen findet sich beispielsweise in W. Hirschmann und A. Hauenstein: "Schaltnetzteile", Siemens AG, Berlin, 1990, S. 72ff.

Eine gebräuchliche Maßnahme zur Unterdrückung von Gleichtakt-Störströmen besteht darin, ein Entstörfilter, z.B. eine stromkompensierte Drossel in die Netzzuleitungen zu schalten. Die Auslegung stromkompensierter Drosseln ist beispielsweise in O. Kilgenstein: "Schaltnetzteile in der Praxis", Vogel Buchverlag, Würzburg, 1986, S. 355ff erläutert. Ihre Wirkung beruht darauf, daß der netzfrequente Nutzstrom ungedämpft passieren kann. Hochfrequente Gleichtakt-Störströme hingegen werden durch die hohe Induktivität der stromkompensierten Drossel ausgefiltert. Einem kompakten Aufbau sind allerdings Grenzen gesetzt, da durch unmittelbar benachbarte Bauteile und deren Störsignale die entstörende Wirkung einer stromkompensierten Drossel vermindert oder sogar - insbesondere aufgrund magnetischer Störfelder - in eine gegenteilige Wirkung umgekehrt werden kann. Ein weiterer Nachteil sind die hohen Kosten.

Bei Geräten der Schutzklasse I können zusätzlich Y-Kondensatoren von den Netzzuleitungen gegen den Schutz- bzw. Erdleiter geschaltet sein, wodurch zumindest ein Teil der Gleichtakt-Störströme zur Erde abfließen kann. Bei Geräten der Schutzklasse II besteht diese Möglichkeit nicht.

Die EP-PS 0 264 765 beschreibt einen elektronischen Konverter zum Betrieb von Niedervolt-Halogenglühlampen, der eine stromkompensierte Drossel zur Funkentstörung aufweist. Außerdem ist die Sekundärseite des Leistungsübertragers - dieser dient als Auskoppelkreis, der die getaktete Spannung des Schaltteils auf die Nennspannung der angeschlossenen Niedervolt-Halogenglühlampe transformiert - über einen Kondensator mit dem Plus- oder Minuspol des Netzgleichrichters verbunden. Dadurch werden Gleichtakt-Störströme, die durch parasitäre Kapazitäten zwischen Primär- und Sekundärwicklung des Leistungsübertragers auf die Lampenzuleitungen koppeln, teilweise kurzgeschlossen. Der Nachteil ist allerdings, daß die jeweiligen Potentiale der beiden Pole der Sekundärseite des Leistungsübertragers im allgemeinen asymmetrisch bezüglich des Erdpotentials sind, d.h., daß die zueinander gegenphasigen Potentialänderungen unterschiedliche Amplituden gegenüber der Umgebung bzw. der Erde haben. Dadurch resultiert ein unerwünschter Netto-Gleichtakt-Störstrom.

Der Erfindung liegt die Aufgabe zugrunde, die genannten Nachteile zu vermeiden und eine Schaltungsanordnung anzugeben, welche den, durch die beiden Sekundärpole des Leistungsübertragers und die daran angeschlossenen Lampenzuleitungen verursachten Netto-Gleichtakt-Störstrom reduziert bzw. idealerweise eliminiert. Ein weiterer Teil der Aufgabe ist es, eine besonders wirtschaftliche Lösung mit möglichst wenigen zusätzlichen Bauteilen anzugeben.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Der Grundgedanke besteht darin, ein zusätzliches Symmetriernetzwerk mit den beiden Polen der Sekundärseite des Leistungsübertragers zu verbinden. Das Symmetriernetzwerk ist außerdem mit dem Anschluß einer an sich bekannten HF-Kurzschlußschaltung verbunden. Der Fußpunkt der HF-Kurzschlußschaltung ist mit einem HF-Bezugspotential verbunden. Je nach Ausgestaltung des elektronischen Konverters ist dafür beispielsweise der Plus- oder Minuspol der Gleichspannungsversorgung, ein beliebiger Pol der Wechselspannungsversorgung - eventuell über weitere Funkentstörbauelemente, z.B. Drosseln - oder, im Falle der Realisierung des Wechselrichters durch einen Halbbrückenwandler, der Verbindungspunkt der zwei Brückenkondensatoren geeignet. Die HF-Kurzschlußschaltung besteht im wesentlichen aus einem oder mehreren seriell geschalteten Kondensatoren. Bevorzugt werden aus Gründen der Redundanz zwei serielle Kondensatoren gleicher Kapazität verwendet. Diese Maßnahme gewährleistet auch im Falle des Defektes (interner Kurzschluß) eines der beiden Kondensatoren eine galvanische Trennung zwischen berührbaren Teilen der Sekundärseite, z.B. den Lampenzuleitungen und für den Anwender gefährlichen Spannungen, beispielsweise der Netzspannung.

Erfindungsgemäß sind die Funkentstörkondensatoren der HF-Kurzschlußschaltung daher nicht nur wie bisher üblich mit einem Anschluß, sondern vielmehr über das Symmetriernetzwerk mit beiden Polen der Sekundärseite des Leistungsübertragers verbunden. Der Vorteil dieser Maßnahme ist eine bessere Symmetrierung der Potentiale beider Pole gegenüber der Bezugserde bzw. der Umgebung. Das bedeutet, daß sich die beiden Potentiale zueinander gegenphasig im Takt des Wechselrichters und - das ist die entscheidende Verbesserung - mit annähemd gleicher Amplitude bezüglich der Bezugserde bzw. der Umgebung verändem.

Dadurch wird eine Reduzierung des Netto-Gleichtakt-Störstroms erzielt. Im Idealfall kompensieren sich die beiden zueinander gegenphasigen Gleichtakt-Störströme, die von den beiden Polen der Sekundärseite des Leistungsübertragers und den damit verbundenen Lampenzuleitungen jeweils über parasitäre Kapazitäten zur Erde bzw. zur Umgebung fließen, sogar vollständig.

Das Symmetriernetzwerk besteht aus passiven elektrischen Bauelementen, z.B. Widerständen und/oder Kondensatoren und/oder Induktivitäten, vorzugsweise nur aus Widerständen und Kondensatoren.

Als besonders vorteilhaft haben sich RC-Netzwerke erwiesen, die aus zwei seriell miteinander verbundenen Parallelschaltungen je eines Widerstandes R₁ bzw. R₂ und eines Kondensators C₁ bzw. C₂ bestehen. Der Verbindungspunkt der beiden Parallelschaltungen ist mit der HF-Kurzschlußschaltung verbunden. Die zwei freien Anschlüsse der beiden Parallelschaltungen sind jeweils mit einem der beiden Anschlüssen der Sekundärseite des Leistungsübertragers kontaktiert. Abhängig vom geforderten Entstörgrad können einzelne Komponenten des Symmetriernetzwerks auch weggelassen werden, sofem die verbliebenen Bauteile entsprechend dimensioniert sind. Folgende Kombinationen haben sich bewährt:

**Tabelle 1:**

| Kombinationen von Bauelementen für Symmetriernetzwerke mit gutem Entstörgrad. | | | | |
|---|---|---|---|---|
| 1. | C₁ | C₂ | R₁ | R₂ |
| 2. | C₁ | C₂ | R₁ | - |
| 3. | C₁ | C₂ | - | - |
| 4. | C₁ | - | R₁ | R₂ |
| 5. | C₁ | - | - | R₂ |

Für die Kombinationen 1 bis 3 sind Kapazitätsverhältnisse C₁:C₂=1:1 bis 1:3 vorteilhaft. Geeignete Kapazitäts- und Widerstandswerte für die Kombinationen 3 bis 5 liegen im Bereich zwischen ca. 0,1 nF und 10 nF bzw. 0,1 kΩ und 10 kΩ. Besonders gute Entstörgrade werden mit Kapazitätswerten im Bereich zwischen ca. 1 nF und 5 nF sowie Widerstandswerten im Bereich zwischen ca. 1 kΩ und 5 kΩ erzielt. Die Reduzierung der Störpegel beträgt dabei bis zu 5 dB. Höhere Kapazitätswerte haben sich nicht bewährt, da insbesondere bei kleiner Anschlußlast unerwünscht hohe Einschaltverluste in den Schalttransistoren entstehen können. Die genannten Bauteile lassen sich z.B. in SMD (Surface Mounted Device)-Technik realisieren. Dadurch wird eine im Vergleich zu konventionellen Techniken preiswerte und kompakte Entstörung erzielt.

Die Erfindung wird anhand der nachfolgenden Ausführungsbeispiele näher erläutert. Es zeigen
- Figur 1: ein Prinzipschaltbild eines elektronischen Konverters für den Betrieb von Niedervolt-Halogenglühlampen mit einem erfindungsgemäßen Symmetriernetzwerk zur Reduzierung von leitungsgebundenen Gleichtakt-Funkstörungen,
- Figur 2: ein Schaltbild eines erfindungsgemäßen Symmetriernetzwerkes,
- Figur 3: ein Schaltbild eines elektronischen Konverters für den Betrieb von Niedervolt-Halogenglühlampen mit einer einfachen Ausführung eines erfindungsgemäßen Symmetriernetzwerks.

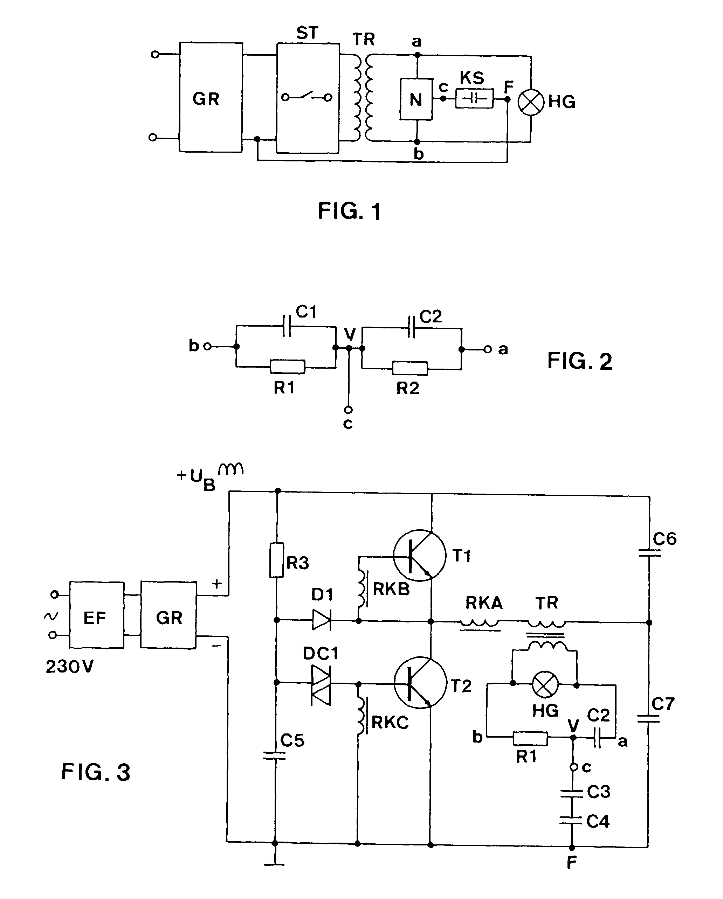

Figur 1 zeigt das Blockschaltbild einer Prinzipschaltung eines elektronischen Konverters zum Betreiben von Niedervolt-Halogenglühlampen, bestehend aus einem Gleichrichter GR zur Gleichrichtung der Netzspannung, einem Schaltteil ST, welches die Gleichspannung in eine hochfrequente Spannung zerhackt sowie einem Leistungsübertrager TR, der die hochfrequente Spannung auf die Betriebsspannung der Halogenglühlampe HG transformiert. Die zwei Anschlüsse a, b des erfindungsgemäßen Symmetriernetzwerks N sind mit den beiden Anschlüssen der Sekundärseite des Leistungsübertragers TR verbunden. Der dritte Anschluß c des Symmetriernetzwerks N ist mit dem Anschluß der HF-Kurzschlußschaltung KS, bestehend aus einem oder mehreren seriell geschalteten Kondensatoren, kontaktiert. Der Fußpunkt F der HF-Kurzschlußschaltung KS ist mit einem beliebigen Anschluß des Gleichrichters GR verbunden. Prinzipiell kann der Fußpunkt F auch mit einem anderen, hochfrequenzmäßig äquivalenten Punkt verbunden sein, etwa, im Falle der Realisierung des Schaltteils ST durch einen Gegentaktwandler in Halbbrückentechnik, mit dem Verbindungspunkt zweier Brückenkondensatoren.

In Figur 2 ist das Schaltbild einer Ausführungsform des erfindungsgemäßen Symmetriernetzwerkes gezeigt. Es handelt sich um zwei seriell miteinander verbundene Parallelschaltungen, bestehend je aus einem Widerstand R₁, R₂ und einem Kondensator C₁, C₂. Entsprechend den Bezeichnungen in Figur 1, werden die beiden Anschlüsse a, b der Serienschaltung mit den beiden Anschlüssen der Sekundärseite des Leistungsübertragers TR verbunden und der Verbindungspunkt V der beiden Parallelschaltungen mittels des Anschlusses c mit der HF-Kurzschlußschaltung KS.

In einfachen und preiswerten Varianten dieser Ausführungsform ist auf einzelne Bauelemente verzichtet, gemäß der Kombinationen in Tabelle 1. Mit Kapazitätswerten und Widerstandswerten in der Größenordnung von ca. 1 nF bzw. 1 kΩ werden ausreichend gute Entstörgrade erzielt.

Figur 3 zeigt ein prinzipielles Schaltbild eines elektronischen Konverters für Niedervolt-Halogenglühlampen, bestehend aus einem Eingangsfilter EF zur Unterdrückung von Gegentakt-Störströmen, einem Gleichrichter GR, einem Triggergenerator, bestehend aus dem Widerstand R3, dem Ladekondensator C5 und dem Diac DC1, einem selbsterregten stromrückgekoppelten Halbbrückenwandler - er besteht aus den beiden Halbbrückentransistoren T1,T2, den beiden Halbbrückenkondensatoren C6, C7 und dem Steuertransformator RKA-RKC für die Stromrückkopplung -, einem Leistungsübertrager TR, an dessen Sekundärwicklung eine 12 V Halogenglühlampe HG betrieben wird, sowie einer Funkentstörschaltung, bestehend aus dem Symmetriernetzwerk R1, C2 und der HF-Kurzschlußschaltung C3, C4.

Die Auslegung von Eingangsfiltern ist z.B. in H.-J. Meyer, ,,Stromversorgungen für die Praxis", Vogel Buchverlag, Würzburg, 1989, S. 115-116 beschrieben. Der Gleichrichter GR besteht aus einer Diodenvollbrücke (siehe z.B. W. Hirschmann und A. Hauenstein, "Schaltnetzteile", Siemens AG, 1990, S. 102) und wandelt die Wechselspannung des Netzes in eine pulsierende Gleichspannung +*U*_{*B*}. Der negative Pol des Gleichrichters ist im folgenden das Bezugspotential. Die beiden Brückentransistoren T1,T2 werden abwechselnd durch die Spannungssignale der beiden Sekundärwicklungen RKB bzw. RKC des Steuerübertragers RKA-RKC durchgeschaltet. Sie schließen damit den Stromkreis über die Primärwicklungen von Steuerübertrager RKA-RKC und Leistungsübertrager TR, sowie über die beiden Brückenkondensatoren C6 bzw. C7. Der Start der Schwingung, etwa nach einer vorübergehenden Unterbrechung der Netzspannung erfolgt, wenn der Ladekondensator C5 die Zündspannung des Diacs DC1 erreicht hat und folglich an der Basis des Brückentransistors T2 ein Steuersignal anliegt. Während der Halbbrückenwandler schwingt, wird der Ladekondensator C5 des Triggergenerators im wesentlichen über die Diode D1 und den Halbbrückentransistor T2 entladen. Dadurch wird verhindert, daß während der Leitendphase des Brückentransistors T2 ein unerwünschtes Triggersignal erzeugt und dem Steuersignal der Sekundärwicklung RKC des Steuerübertragers RKA-RKC überlagert wird. Die Sekundärwicklung des Leistungsübertragers TR ist zum einen mit einer 12 V Halogenglühlampe HG verbunden. Zum anderen ist parallel zur Sekundärwicklung eine Reihenschaltung aus dem Widerstand R1 und dem Kondensator C2 geschaltet. Der Verbindungspunkt zwischen Kondensator C2 und Widerstand R1 ist über die HF-Kurzschlußschaltung C3, C4 mit dem Bezugspotential verbunden. Dadurch wird eine weitgehende Symmetrierung der Potentiale der beiden Anschlüsse der Sekundärwicklung bezüglich des Bezugspotentials erreicht. Der Fußpunkt F der HF-Kurzschlußschaltung kann auch mit einem beliebigen anderen Anschluß des Gleichrichters GR oder dem Verbindungspunkt der beiden Brückenkondensatoren C6, C7 verbunden sein, ohne daß die Erfindung ihre vorteilhafte Wirkung verliert. In der folgenden Tabelle 2 ist eine Bauteileliste für ein konkretes Ausführungsbeispiel angegeben. Mit dieser besonders einfachen und preiswerten Lösung wird eine Reduzierung der Funkstörpegel um ca. 3 bis 5 dB erzielt.

Die Erfindung ist nicht auf die angegebenen Ausführungsbeispiele beschränkt. Insbesondere kann das erfindungsgemäße Symmetriernetzwerk durch eine Vielzahl unterschiedlicher Kombinationen passiver Bauelemente realisiert werden.

**Tabelle 2:**

| Bauteileliste für ein Ausführungsbeispiel gemäß der Schaltung aus Figur 3. | |
|---|---|
| R1 | 1,2 kΩ |
| R3 | 270 kΩ |
| C2 | 2,2 nF, 50 V |
| C3, C4 | 2,2 nF, 400V~/2kV~ |
| C5 | 8,2 nF; 100 V |
| C6, C7 | 15 nF; 400 V |
| D1 | BA157 |
| DC1 | Diac, 33V |
| RKA-RKC | R 10/6/4 5/5/1 Windungen |
| TR | EF 25/7,5 63/7 Windungen |
| T1, T2 | BUL381D |
| HG | Halogenglühlampe 12V, 20W bis 60W |

## Patentansprüche

1. Getaktete Stromversorgung zum Betreiben einer oder mehrerer parallel geschalteter Glühlampen, insbesondere Niedervolt-Halogenglühlampen, mit einem Schaltteil (ST; T1, T2), das von einer Spannungsversorgung (GR) gespeist wird, und einem damit verbundenen Leistungsübertrager (TR), dessen Sekundärseite einerseits mit der bzw. den Glühlampen (HG) verbunden ist und andererseits mit einer Funkentstörschaltung kontaktiert ist, die eine HF-Kurzschlußschaltung (KS; C3, C4) enthält, deren Anschluß (c) mit der Sekundärseite des Leistungsübertragers (TR) und deren Fußpunkt (F) mit einem HF-Bezugspotential verbunden ist, dadurch gekennzeichnet, daß die Funkentstörschaltung zusätzlich ein Symmetriernetzwerk (N; C1, C2, R1, R2) aus passiven Bauelementen enthält, welches zwischen der Sekundärseite des Leistungsübertragers und der HF-Kurzschlußschaltung geschaltet ist, wobei das Symmetriernetzwerk (N) mit den zwei Polen (a, b) der Sekundärseite des Leistungsübertragers (TR) einerseits und mit dem Anschluß (c) der HF-Kurzschlußschaltung (KS) andererseits verbunden ist.

2. Getaktete Stromversorgung nach Anspruch 1, dadurch gekennzeichnet, daß das Symmetriernetzwerk aus einem oder mehreren der Bauelemente Kondensator, Widerstand und Spule oder aus einer Kombination dieser Bauelemente aufgebaut ist.

3. Getaktete Stromversorgung nach Anspruch 2, dadurch gekennzeichnet, daß das Symmetriernetzwerk aus einer Reihenschaltung zweier Kondensatoren (C1, C2) besteht, wobei der Verbindungspunkt (V) der beiden Kondensatoren (C1, C2) mit dem Anschluß (c) der HF-Kurzschlußschaltung (KS; C3, C4) verbunden ist und wobei die Anschlüsse (a, b) der Reihenschaltung jeweils mit einem der beiden Pole der Sekundärseite des Leistungsübertragers (TR) kontaktiert sind.

4. Getaktete Stromversorgung nach Anspruch 3, dadurch gekennzeichnet, daß einem der oder beiden Kondensatoren (C1, C2) jeweils ein Widerstand (R1, R2) parallel geschaltet ist.

5. Getaktete Stromversorgung nach Anspruch 3 oder 4, dadurch gekennzeichnet, daß das Kapazitätsverhältnis der beiden Kondensatoren (C1, C2) des Symmetriernetzwerkes im Bereich zwischen ca. 1:1 bis 1:3 liegt.

6. Getaktete Stromversorgung nach Anspruch 2, dadurch gekennzeichnet, daß das Symmetriernetzwerk aus einer Reihenschaltung eines Kondensators (C2) und eines Widerstandes (R1) besteht, wobei der Verbindungspunkt (V) der beiden Bauelemente mit dem Anschluß (c) der HF-Kurzschlußschaltung (C3, C4) verbunden ist und wobei die Anschlüsse (a, b) der Reihenschaltung (R1, C2) jeweils mit einem der beiden Pole der Sekundärseite des Leistungsübertragers (TR) kontaktiert sind.

7. Getaktete Stromversorgung nach Anspruch 6, dadurch gekennzeichnet, daß dem Kondensator zusätzlich ein Widerstand parallel geschaltet ist.

8. Getaktete Stromversorgung nach einem der Ansprüche 3, 6 oder 7, dadurch gekennzeichnet, daß der Kapazitätswert des Kondensators bzw. die Kapazitätswerte der Kondensatoren im Bereich zwischen ca. 0,1 nF und 10 nF liegen.

9. Getaktete Stromversorgung nach Anspruch 8, dadurch gekennzeichnet, daß der Kapazitätswert bzw. die Kapazitätswerte bevorzugt im Bereich zwischen ca. 1 nF und 5 nF liegen.

10. Getaktete Stromversorgung nach einem der Ansprüche 6 oder 7, dadurch gekennzeichnet, daß der Wert des Widerstandes bzw. die Werte der Widerstände im Bereich zwischen ca. 0,1 kΩ und 10 kΩ liegen.

11. Getaktete Stromversorgung nach Anspruch 10, dadurch gekennzeichnet, daß der Wert bzw. die Werte bevorzugt im Bereich zwischen ca. 1 kΩ und 5 kΩ liegen.

12. Getaktete Stromversorgung nach einem der vorstehenden Ansprüche, dadurch gekennzeichnet, daß als HF-Bezugspotential für die Kontaktierung des Fußpunktes der HF-Kurzschlußschaltung (KS; C3, C4) der Plus- oder Minuspol des Gleichrichters (GR) verwendet ist.

13. Getaktete Stromversorgung nach einem der vorstehenden Ansprüche, dadurch gekennzeichnet, daß als HF-Bezugspotential für die Kontaktierung des Fußpunktes der HF-Kurzschlußschaltung ein Anschluß der Netzspannungsversorgung verwendet ist.

14. Getaktete Stromversorgung nach einem der vorstehenden Ansprüche, dadurch gekennzeichnet, daß, falls das Schaltteil als Gegentaktwandler in Halbbrückenschaltung realisiert ist, als HF-Bezugspotential für die Kontaktierung des Fußpunktes der HF-Kurzschlußschaltung der Verbindungspunkt der zwei Brückenkondensatoren verwendet ist.

15. Getaktete Stromversorgung nach einem der vorstehenden Ansprüche, dadurch gekennzeichnet, daß die HF-Kurzschlußschaltung (KS) aus zwei seriell geschalteten Kondensatoren (C3, C4) besteht.

## Claims

1. Pulsed power supply for operating one or a plurality of incandescent lamps connected in parallel, in particular low-voltage incandescent halogen lamps, having a switching section (ST; T1, T2), which is fed by a voltage supply (GR), and a power transformer (TR), which is connected to the said switching section and whose secondary side is on the one hand connected to the incandescent lamp or incandescent lamps (HG) and on the other hand is contact-connected to a radio interference suppression circuit containing an RF short-circuiting circuit (KS; C3, C4), whose terminal (c) is connected to the secondary side of the power transformer (TR) and whose reference-earth point (F) is connected to an RF reference-earth potential, characterized in that the radio interference suppression circuit additionally contains a balancing network (N; C1, C2, R1, R2) comprising passive components which is connected between the secondary side of the power transformer and the RF short-circuiting circuit, the balancing network (N) being connected to the two poles (a, b) of the secondary side of the power transformer (TR), on the one hand, and to the terminal (c) of the RF short-circuiting circuit (KS), on the other hand.

2. Pulsed power supply according to Claim 1, characterized in that the balancing network is constructed from one or more of the components capacitor, resistor and coil or from a combination of these components.

3. Pulsed power supply according to Claim 2, characterized in that the balancing network comprises a series circuit formed by two capacitors (C1, C2), the junction point (V) between the two capacitors (C1, C2) being connected to the terminal (c) of the RF short-circuiting circuit (KS; C3, C4), and the terminals (a, b) of the series circuit in each case being contact-connected to one of the two poles of the secondary side of the power transformer (TR).

4. Pulsed power supply according to Claim 3, characterized in that a resistor (R1, R2) is respectively connected in parallel with one or both of the capacitors (C1, C2).

5. Pulsed power supply according to Claim 3 or 4, characterized in that the capacitance ratio of the two capacitors (C1, C2) of the balancing network lies in the range of between approximately 1:1 and 1:3.

6. Pulsed power supply according to Claim 2, characterized in that the balancing network comprises a series circuit formed by a capacitor (C2) and a resistor (R1), the junction point (V) between the two components being connected to the terminal (c) of the RF short-circuiting circuit (C3, C4), and the terminals (a, b) of the series circuit (R1, C2) in each case being contact-connected to one of the two poles of the secondary side of the power transformer (TR).

7. Pulsed power supply according to Claim 6, characterized in that a resistor is additionally connected in parallel with the capacitor.

8. Pulsed power supply according to one of Claims 3, 6 or 7, characterized in that the capacitance of the capacitor or the capacitances of the capacitors lie in the range of between approximately 0.1 nF and 10 nF.

9. Pulsed power supply according to Claim 8, characterized in that the capacitance or the capacitances preferably lie in the range of between approximately 1 nF and 5 nF.

10. Pulsed power supply according to either of Claims 6 and 7, characterized in that the value of the resistor or the values of the resistors lie in the range of between approximately 0.1 kΩ and 10 kΩ.

11. Pulsed power supply according to Claim 10, characterized in that the value or the values preferably lie in the range of between approximately 1 kΩ and 5 kΩ.

12. Pulsed power supply according to one of the preceding claims, characterized in that the positive or negative pole of the rectifier (GR) is used as the RF reference-earth potential for contact-connecting the reference-earth point of the RF short-circuiting circuit (KS; C3, C4).

13. Pulsed power supply according to one of the preceding claims, characterized in that a terminal of the mains voltage supply is used as the RF reference-earth potential for contact-connecting the reference-earth point of the RF short-circuiting circuit.

14. Pulsed power supply according to one of the preceding claims, characterized in that, if the switching section is realized as a push-pull converter in a half-bridge circuit, the junction point between the two bridge capacitors is used as the RF reference-earth potential for contact-connecting the reference-earth point of the RF short-circuiting circuit.

15. Pulsed power supply according to one of the preceding claims, characterized in that the RF short-circuiting circuit (KS) comprises two capacitors (C3, C4) connected in series.

## Revendications

1. Alimentation a découpage pour faire fonctionner une ou plusieurs lampes à incandescence, notamment des lampes à incandescence à halogène à basse tension, branchées en parallèle, comportant une partie (ST; T1, T2) formant interrupteur, qui est alimentée par une alimentation (GR) en tension, et un transformateur (TR) de puissance, qui est relié à cette partie formant interrupteur et dont le côté secondaire est d'une part relié à la lampe ou aux lampes (HG) incandescentes et d'autre part mis en contact avec un circuit d'antiparasitage qui contient un circuit (KS ; C3, C4) de court-circuit haute fréquence dont la borne (c) est reliée au côté secondaire du transformateur (TR) de puissance et dont le point (F) de base est relié à un potentiel de référence haute fréquence, caractérisée en ce que le circuit d'antiparasitage contient de plus un système (N ; C1, C2, R1, R2) d'équilibrage qui est constitué de composants passifs et qui est branché entre le côté secondaire du transformateur de puissance et le circuit de court-circuit haute fréquence, le système (N) d'équilibrage étant relié d'une part aux deux pôles (a, b) du côté secondaire du transformateur (TR) de puissance et d'autre part à la borne (c) du circuit (KS) de court-circuit haute fréquence.

2. Alimentation à découpage suivant la revendication 1, caractérisée en ce que le système d'équilibrage est constitué d'un ou de plusieurs des composants: condensateur, résistance et bobine, ou d'une combinaison de ces composants.

3. Alimentation à découpage suivant la revendication 2, caractérisée en ce que le système d'équilibrage est constitué d'un circuit série de deux condensateurs (C1, C2) le point (V) de liaison des deux condensateurs (C1, C2) étant relié à la borne (c) du circuit (KS ; C3, C4) de court-circuit haute fréquence et les bornes (a, b) du circuit série étant mises en contact chacune avec l'un des deux pôles du côté secondaire du transformateur (TR) de puissance.

4. Alimentation à découpage suivant la revendication 3, caractérisée en ce que chaque fois une résistance (R1, R2) est montée en parallèle avec l'un des condensateurs (C1, C2) ou avec les deux condensateurs (C1, C2).

5. Alimentation à découpage suivant la revendication 3 ou 4, caractérisée en ce que le rapport de capacité des deux condensateurs (C1, C2) du système d'équilibrage est dans l'intervalle compris entre environ 1:1 à 1:3.

6. Alimentation à découpage suivant la revendication 2, caractérisée en ce que le système d'équilibrage est constitué d'un circuit série d'un condensateur (C2) et d'une résistance (R1), le point (V) de liaison des deux composants étant relié à la borne (C) du circuit (C3, C4) de court-circuit haute fréquence et les bornes (a, b) du circuit série (R1, C2) étant mises en contact chacune avec l'un des deux pôles du côté secondaire du transformateur (TR) de puissance.

7. Alimentation à découpage suivant la revendication 6, caractérisée en ce qu'une résistance est en plus montée en parallèle au condensateur.

8. Alimentation à découpage suivant l'une des revendications 3, 6 ou 7, caractérisée en ce que la valeur de capacité du condensateur ou les valeurs de capacité des condensateurs sont dans l'intervalle compris entre environ 0,1 nF et 10 nF.

9. Alimentation à découpage suivant la revendication 8, caractérisée en ce que la valeur de capacité ou les valeurs de capacité sont de préférence dans l'intervalle compris entre environ 1 nF et 5 nF.

10. Alimentation à découpage suivant l'une des revendications 6 ou 7, caractérisée en ce que la valeur de la résistance ou les valeurs des résistances sont dans l'intervalle compris entre environ 0,1 kΩ et 10 kΩ.

11. Alimentation à découpage suivant la revendication 10, caractérisée en ce que la valeur ou les valeurs sont de préférence dans l'intervalle compris entre environ 1 kΩ et 5 kΩ.

12. Alimentation à découpage suivant l'une des revendications précédentes, caractérisée en ce qu'on utilise le pôle plus ou le pôle moins du redresseur (GR) comme potentiel de référence haute fréquence pour la mise en contact du point de base du circuit (KS; C3, C4) de court-circuit haute fréquence.

13. Alimentation à découpage suivant l'une des revendications précédentes, caractérisée en ce que l'on utilise une borne de l'alimentation en tension du secteur comme potentiel de référence haute fréquence pour la mise en contact du point de base du circuit de court-circuit haute fréquence.

14. Alimentation à découpage suivant l'une des revendications précédentes, caractérisée en ce que, dans le cas où la partie formant interrupteur est réalisée en transformateur symétrique en circuit en demi-pont, on utilise le point de liaison des deux condensateurs en pont pour la mise en contact du point de base du circuit de court-circuit haute fréquence.

15. Alimentation à découpage suivant l'une des revendications précédentes, caractérisée en ce que le circuit (KS) de court-circuit haute fréquence est constitué de deux condensateurs (C3, C4) branchés en série.
